# EUROPEAN PATENT APPLICATION

(11) **EP 4 571 453 A1**
(43) Date of publication of application: **18.06.2025**
(21) Application number: 23865845.4
(22) Date of filing: 13.09.2023
(51) Int. Cl.: G06F 1/16

(54) **ELECTRONIC DEVICE INCLUDING FLEXIBLE DISPLAY BUFFER STRUCTURE**

(30) Priority: 13.09.2022 KR 20220114798; 24.10.2022 KR 20220137469
(71) Applicant: Samsung Electronics Co., Ltd., Suwon-si, Gyeonggi-do 16677 (KR)
(72) Inventor: SON, Kidoc, Suwon-si, Gyeonggi-do 16677 (KR); CHOI, Hyunsuk, Suwon-si, Gyeonggi-do 16677 (KR); PARK, Byounggyu, Suwon-si, Gyeonggi-do 16677 (KR); KIM, Taejeong, Suwon-si, Gyeonggi-do 16677 (KR); BAE, Yosep, Suwon-si, Gyeonggi-do 16677 (KR); SONG, Kyunghwan, Suwon-si, Gyeonggi-do 16677 (KR); LEE, Jonghun, Suwon-si, Gyeonggi-do 16677 (KR)
(74) Representative: Appleyard Lees IP LLP
(86) International application number: PCT/KR2023/013729
(87) International publication number: WO 2024/058549

(57) **Abstract**

An electronic device according to an embodiment of the present disclosure may include: a first housing; a second housing slidably coupled to the first housing; a flexible display disposed to be supported by the first housing and the second housing and having a display area reduced or increased on the basis of slide-in or slide-out of the second housing; a support member including a bendable structure, supporting at least a portion of the flexible display, and moving along sliding of the second housing; a guide rail for guiding a movement of the support member; and a support bracket supporting the support member and including a support part having an outer surface formed to have a polygonal shape.

## Description

### `[Technical Field]

Various embodiments disclosed in this document relate to an electronic device including a flexible display buffer structure. For example, it may include an embodiment of a structure for cushioning an impact applied to the flexible display disposed in the electronic device that performs a slide-in or slide-out operation.

### [Background Art]

Displays may be a key feature in portable electronic devices. A display may visually represent information. Factors such as the design, size, and/or quality of the display may play an important role in consumers' choice of electronic devices.

Recently, flexible displays are being released on the market due to the advancement of display technology. Using these flexible displays, displays with variable screen sizes can also be implemented. For example, electronic devices are being developed that include displays that can increase or decrease screen size by sliding or that can be rolled onto a specific mechanical object.

### [Disclosure of Invention]

### [Technical Problem]

In an electronic device including a rollable, slidable, or flexible display, the display may be deformed (e.g., bent) in some sections. Hence, a structure capable of supporting the deformable display may be required. For example, the display may be supported by a support member having a bendable structure. This support member may be supported by a support bracket on which electronic components are arranged. For example, the support member may be supported in sliding operation by a curved support part included in the support bracket.

Meanwhile, if an impact is applied to the display from outside the electronic device, the impact may be transferred to the inside of the electronic device, causing a collision between the support member and the support bracket. The collision occurring between the support member and the support bracket may be transferred to the display as a reaction force. This may cause damage to the display.

An embodiment of the disclosure may present a structure in which damage to the display can be mitigated.

### [Solution to Problem]

An electronic device according to an embodiment of the disclosure may include: a first housing; a second housing slidably coupled to the first housing; a flexible display that is arranged to be supported by the first housing and the second housing, and whose display area is reduced or expanded based on the slide-in or slide-out of the second housing; a support member that includes a bendable structure, supports at least a portion of the flexible display, and moves according to the sliding of the second housing; a guide rail that guides the movement of the support member; and a support bracket that supports the support member and includes a support part whose outer surface is formed as a polygon.

An electronic device according to an embodiment of the disclosure may include: a first housing; a second housing slidably coupled to the first housing; a flexible display that is arranged to be supported by the first housing and the second housing, and whose display area is reduced or expanded based on the slide-in or slide-out of the second housing; a support member that includes a bendable structure, supports at least a portion of the flexible display, and moves according to the sliding of the second housing; a guide rail that guides the movement of the support member; and a support bracket that includes a first bracket including a support part supporting the support member, and a second bracket on which electronic components of the electronic device are mounted and made of a material different from that of the first bracket.

An electronic device according to an embodiment of the disclosure may include: a first housing; a second housing slidably coupled to the first housing; a flexible display that is arranged to be supported by the first housing and the second housing, and whose display area is reduced or expanded based on the slide-in or slide-out of the second housing; a support bracket including a support part; a support member that includes a bendable structure, is supported by the support part, supports at least a portion of the flexible display, moves according to the sliding of the second housing, and includes a pattern formed on a surface facing the flexible display; and a guide rail that guides the movement of the support member.

### [Advantageous Effects of Invention]

An embodiment of the disclosure can present a structure in which a collision between the support member and the support bracket caused by an external impact applied to the display is buffered. As the impact between the support member and the support bracket is cushioned, damage to the display due to the repulsive force between the support member and the support bracket can be mitigated.

### [Brief Description of Drawings]

In connection with the description of the drawings, the same or similar reference symbols may be used for identical or similar components.
FIG. 1 is a block diagram of an electronic device within a network environment according to various embodiments of the disclosure.
FIGS. 2A and 2B are diagrams illustrating the front and back of the electronic device in slide-in state according to an embodiment of the disclosure.
FIGS. 3A and 3B are diagrams illustrating the front and back of the electronic device in slide-out state according to an embodiment of the disclosure.
FIG. 4 is an exploded perspective view of the electronic device according to an embodiment of the disclosure.
FIG. 5A is a cross-sectional view of the electronic device taken along line 5a-5a in FIG. 2A according to an embodiment of the disclosure.
FIG. 5B is a cross-sectional view of the electronic device in intermediate state according to an embodiment of the disclosure.
FIG. 5C is a cross-sectional view of the electronic device taken along line 5c-5c in FIG. 3A according to an embodiment of the disclosure.
FIG. 6 is a diagram showing a support member arranged in the flexible display according to an embodiment of the disclosure.
FIG. 7A is a diagram showing a pattern formed on the rear surface of the support member according to an embodiment of the disclosure.
FIG. 7B is a diagram showing an embodiment of a pattern formed on the support member illustrated in FIG. 7A.
FIGS. 8A and 8B are cross-sectional views of the electronic device taken along line 5a-5a in FIG. 2A for explaining a polygon formed in the support part of the support bracket according to one embodiment of the disclosure.
FIG. 9A is a cross-sectional view of the electronic device taken along line 5a-5a in FIG. 2A for explaining a coupling relationship between a first bracket and a second bracket of the support bracket according to an embodiment of the disclosure.
FIG. 9B is a cross-sectional view of the electronic device taken along line 5a-5a in FIG. 2A for explaining an elastic member disposed between a coupling groove of the first bracket and a coupling portion of the second bracket according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

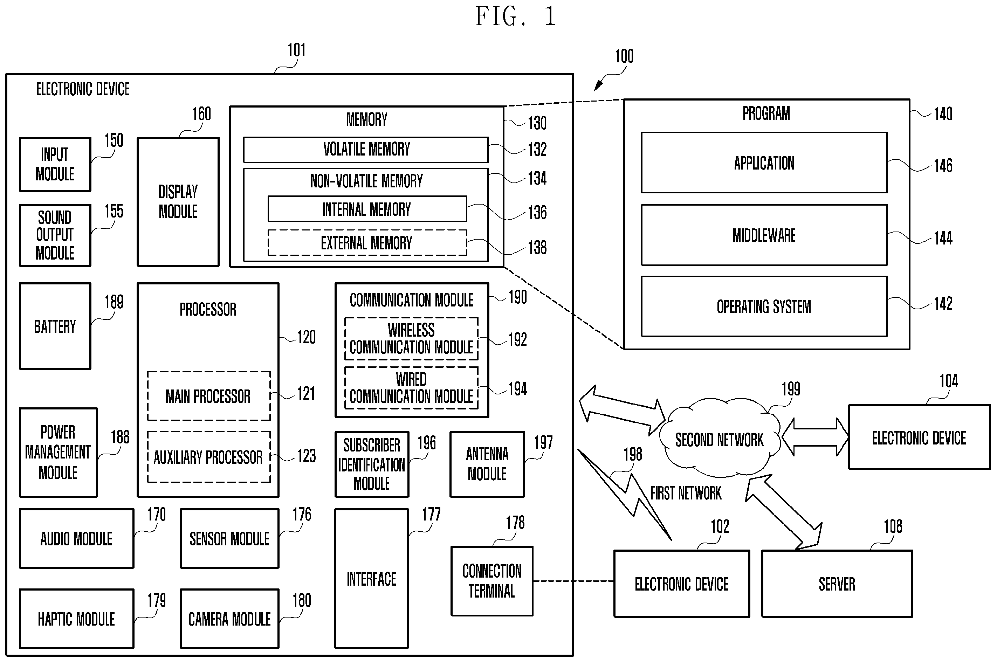

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

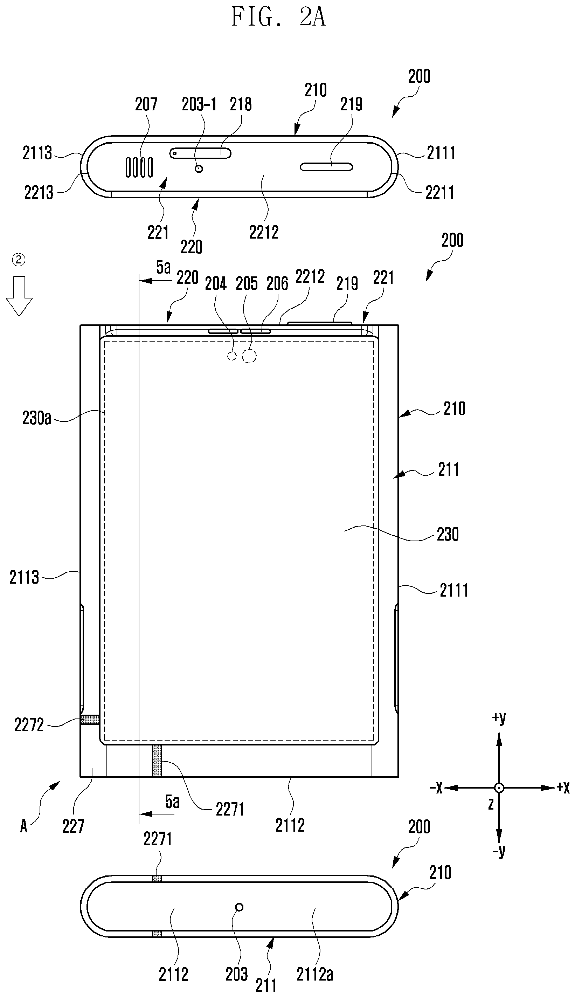

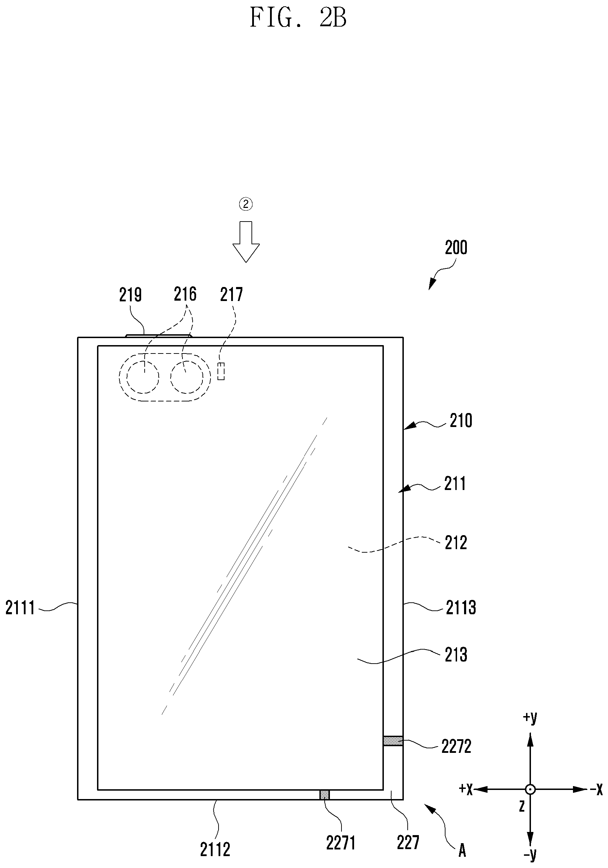

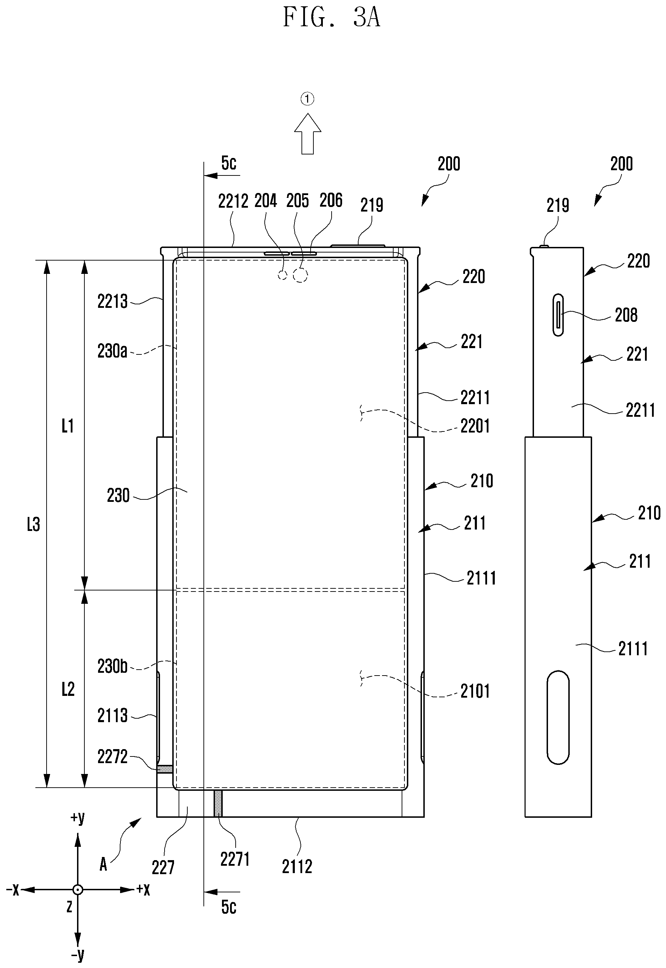

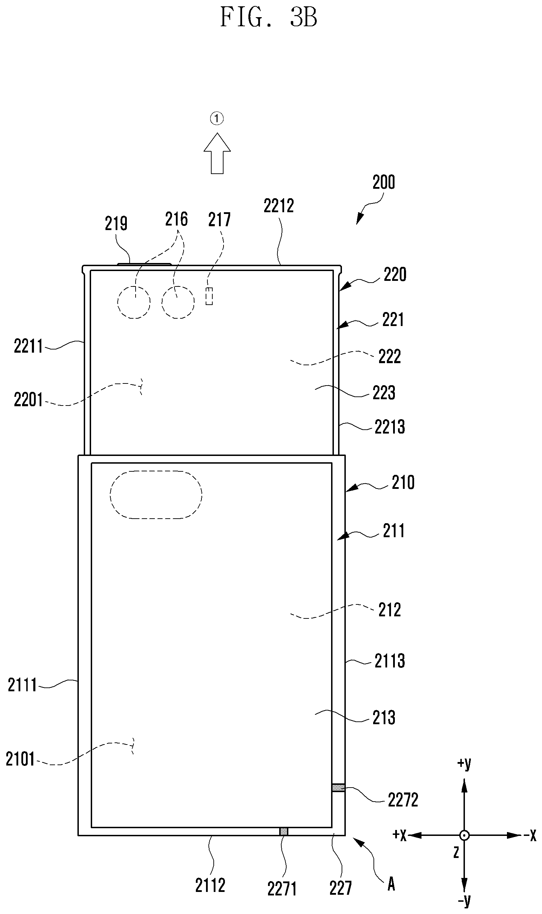

FIGS. 2A and 2B are diagrams illustrating the front and back of the electronic device in slide-in state according to various embodiments of the disclosure. FIGS. 3A and 3B are diagrams illustrating the front and back of the electronic device in slide-out state according to various embodiments of the disclosure.

The electronic device 200 of FIGS. 2A to 3B may be at least partially similar to the electronic device 101 of FIG. 1, or may further include other embodiments of an electronic device.

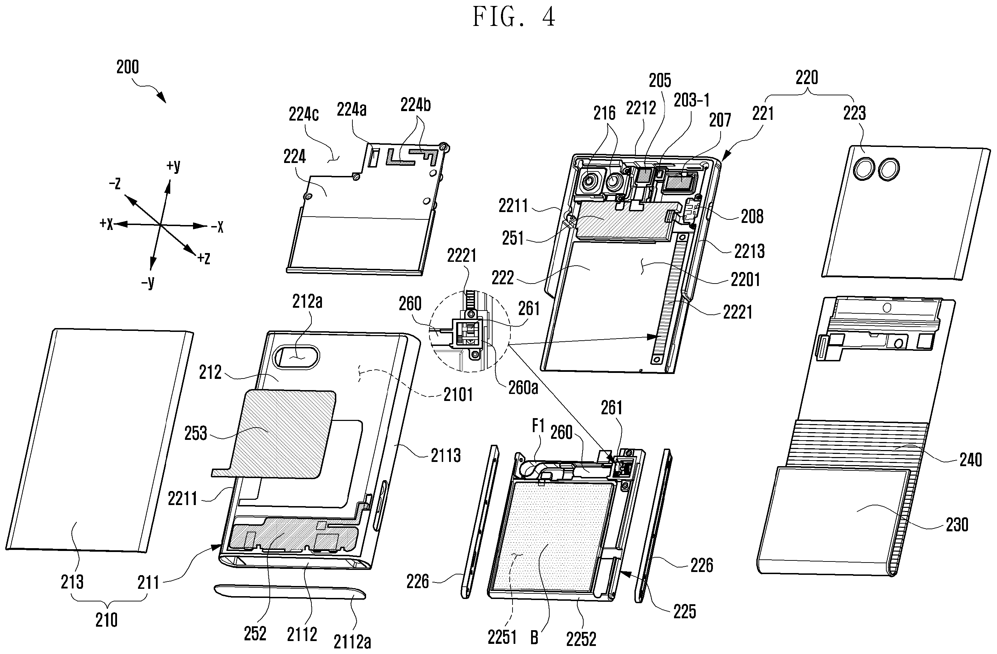

With reference to FIGS. 2A to 3B, the electronic device 200 may include a first housing 210, a second housing 220 slidably coupled with the first housing 210 in a specified direction (e.g., direction ① or direction ②) (e.g., ± y-axis direction), and a flexible display 230 (e.g., rollable display, expandable display, or stretchable display) disposed to be supported by at least a portion of the first housing 210 and the second housing 220. In an embodiment, the second housing 220 may be slidably coupled to the first housing 210 so that the second housing 220 is slid out in a first direction (direction ①) or is slid in in a second direction (direction ②) opposite to the first direction (direction ①) with respect to the first housing 210. In one embodiment, the electronic device 200 may be changed to a slide-in state by accommodating at least a portion of the second housing 220 in at least a portion of a first space 2101 formed through the first housing 210. In an embodiment, the electronic device 200 may be changed to a slide-out state by moving at least a portion of the second housing 220 from the first space 2101 in an outward direction (e.g., direction ①). In an embodiment, the electronic device 200 may include a support member (e.g., support member 240 in FIG. 4) (e.g., bendable member, bendable support member, multi-link hinge module, or multi bar assembly) that at least partially forms the same plane as at least a portion of the second housing 220 in the slide-out state and is received at least partially in a bending manner into the first space 2101 of the first housing 210 in the slide-in state. In an embodiment, at least a portion of the flexible display 230 may be disposed in a manner of being attached to at least a portion of the second housing 220. In an embodiment, at least a portion of the remaining part of the flexible display 230 may be attached to the support member 240 (e.g., support member 240 in FIG. 4). In an embodiment, at least a portion of the flexible display 230 may be arranged to be invisible from the outside in the slide-in state by being received in a bending manner in the first space 2101 of the first housing 210 while being supported by the support member (e.g., support member 240 in FIG. 4). In an embodiment, at least a portion of the flexible display 230 may be arranged to be visible from the outside in the slide-out state while being supported by the support member (e.g., support member 240 in FIG. 4) forming at least partially the same plane as the second housing 220.

According to an embodiment, the electronic device 200 may include a first housing 210 including a first lateral member 211, and a second housing 220 including a second lateral member 221. In an embodiment, the first lateral member 211 may include a first side surface 2111 having a first length along a first direction (e.g., y-axis direction), a second side surface 2112 extended from the first side surface 2111 to have a second length shorter than the first length along a substantially perpendicular direction (e.g., x-axis direction), and a third side surface 2113 extended substantially parallel to the first side surface 2111 from the second side surface 2112 and having the first length. In an embodiment, the first lateral member 211 may be at least partially made of a conductive member (e.g., metal). In a certain embodiment, the first lateral member 211 may be made of a combination of a conductive member and a non-conductive member (e.g., polymer). In an embodiment, the first housing 210 may include a first extension member 212 extended from at least a portion of the first lateral member 211 to at least a portion of the first space 2101. In an embodiment, the first extension member 212 may be formed integrally with the first lateral member 211. In a certain embodiment, the first extension member 212 may be formed separately from the first lateral member 211 and may be structurally coupled to the first lateral member 211.

According to an embodiment, the second lateral member 221 may include a fourth side surface 2211 that corresponds at least partially to the first side surface 2111 and has a third length, a fifth side surface 2212 extended from the fourth side surface 2211 in a direction substantially parallel to the second side surface 2112 and having a fourth length shorter than the third length, and a sixth side surface 2213 extended from the fifth side surface 2212 in correspondence to the third side surface 2113 and having the third length. In an embodiment, the second lateral member 221 may be at least partially made of a conductive member (e.g., metal). In a certain embodiment, the second lateral member 221 may be made of a combination of a conductive member and a non-conductive member (e.g., polymer). In an embodiment, at least a portion of the second lateral member 221 may include a second extension member 222 extended to at least a portion of the second space 2201 of the second housing 220. In an embodiment, the second extension member 222 may be formed integrally with the second lateral member 221. In a certain embodiment, the second extension member 222 may be formed separately from the second lateral member 221 and may be structurally coupled to the second lateral member 221.

According to an embodiment, the first side surface 2111 and the fourth side surface 2211 may be slidably coupled to each other. In an embodiment, the third side surface 2113 and the sixth side surface 2213 may be slidably coupled to each other. In an embodiment, the fourth side surface 2211 may be disposed to be substantially invisible from the outside in the slide-in state by being overlapped with the first side surface 2111. In an embodiment, the sixth side surface 2213 may be disposed to be substantially invisible from the outside in the slide-in state by being overlapped with the third side surface 2113. In a certain embodiment, at least a portion of the fourth side surface 2211 and the sixth side surface 2213 may be disposed to be at least partially visible from the outside in the slide-in state. In an embodiment, the second extension member 222 may be disposed to be substantially invisible from the outside in the slide-in state by being overlapped with the first extension member 212. In a certain embodiment, the second extension member 222 may be disposed to be at least partially visible from the outside in the slide-in state.

According to an embodiment, the first housing 210 may include a first rear cover 213 coupled to at least a portion of the first lateral member 211. In an embodiment, the first rear cover 213 may be disposed in a manner being coupled to at least a portion of the first extension member 212. In a certain embodiment, the first rear cover 213 may be formed integrally with the first lateral member 211. In an embodiment, the first rear cover 213 may be made of polymer, coated or colored glass, ceramic, metal (e.g., aluminum, stainless steel (STS), or magnesium), or a combination of at least two of these materials. In a certain embodiment, the first rear cover 213 may be extended to at least a portion of the first lateral member 211. In a certain embodiment, the first rear cover 213 may be omitted, and at least a portion of the first extension member 212 may be replaced with the first rear cover 213.

According to an embodiment, the second housing 220 may include a second rear cover 223 coupled to at least a portion of the second lateral member 221. In an embodiment, the second rear cover 223 may be disposed in a manner of being coupled to at least a portion of the second extension member 222. In a certain embodiment, the second rear cover 223 may be formed integrally with the second lateral member 221. In an embodiment, the second rear cover 223 may be made of polymer, coated or colored glass, ceramic, metal (e.g., aluminum, stainless steel (STS), or magnesium), or a combination of at least two of these materials. In a certain embodiment, the second rear cover 223 may be extended to at least a portion of the second lateral member 221. In a certain embodiment, the second rear cover 223 may be omitted, and at least a portion of the second extension member 222 may be replaced with the second rear cover 223.

According to an embodiment, the flexible display 230 may include a first part 230a (e.g., flat part) that is always visible from the outside, and a second part 230b (e.g., bendable part or bending part) that is extended from the first part 230a and is received in the first space 2101 of the first housing 210 in a manner being at least partially bent so as to be invisible from the outside in the slide-in state. In an embodiment, the first part 230a may be disposed to be supported by the second housing 220, and the second part 230b may be disposed to be at least partially supported by the support member (e.g., support member 240 in FIG. 4). In an embodiment, the second part 230b of the flexible display 230 may form substantially the same plane as the first part 230a while being supported by the support member (e.g., support member 240 in FIG. 4) in a state where the second housing 220 is slid out along the first direction (direction ①), and may be disposed to be visible from the outside. In an embodiment, the second part 230b of the flexible display 230 may be received in a manner of being bent in the first space 2101 of the first housing 210 in a state where the second housing 220 is slid in along the second direction (direction ②), and may be disposed to be invisible from the outside. Hence, the display area of the flexible display 230 may vary as the second housing 220 is moved in a sliding manner along a specified direction (e.g., ±y-axis direction) from the first housing 210.

According to an embodiment, the length of the flexible display 230 may be variable in the first direction (direction ①) according to the sliding movement of the second housing 220 relative to the first housing 210. For example, in the slide-in state, the flexible display 230 may have a first display area corresponding to the first length L1 (e.g., area corresponding to the first part 230a). In an embodiment, in the slide-out state, the flexible display 230 may be expanded to have a second display area that corresponds to the third length L3 longer than the first length L1 and is larger than the first display area (e.g., area including the first part 230a and the second part 230b) according to the sliding movement of the second housing 220 moved further by the second length L2 relative to the first housing 210.

According to an embodiment, the electronic device 200 may include at least one of input device (e.g., microphone 203-1), sound output device (e.g., call receiver 206 and/or speaker 207), sensor module 204 and 217, camera module (e.g., first camera module 205 or second camera module 216), connector port 208, key input device 219, or indicator (not shown), which are arranged in the second space 2201 of the second housing 220. In an embodiment, the electronic device 200 may include another input device (e.g., microphone 203) disposed in the first housing 210. In a certain embodiment, the electronic device 200 may be configured to omit at least one of the above-described components or to additionally include other components. In a certain embodiment, at least one of the above-described components may be disposed in the first space 2101 of the first housing 210.

According to an embodiment, the input device may include a microphone 203-1. In a certain embodiment, the input device (e.g., microphone 203-1) may include a plurality of microphones arranged to detect the direction of a sound. The sound output device may include, for example, a call receiver 206 and a speaker 207. In an embodiment, the speaker 207 may correspond to the outside through at least one speaker hole formed in the second housing 220 at a position always exposed to the outside (e.g., fifth side surface 2212) regardless of the slide-in/slide-out state. In an embodiment, the connector port 208 may correspond to the outside through a connector port hole formed in the second housing 220 in the slide-out state. In a certain embodiment, the connector port 208 may correspond to the outside in the slide-in state through an opening formed in the first housing 210 in correspondence to the connector port hole. In a certain embodiment, the call receiver 206 may include a speaker (e.g., piezo speaker) that operates without a separate speaker hole.

According to an embodiment, the sensor modules 204 and 217 may generate an electrical signal or data value corresponding to an internal operating state of the electronic device 200 or an external environmental state. In an embodiment, the sensor modules 204 and 217 may include, for example, a first sensor module 204 (e.g., proximity sensor or illumination sensor) disposed on the front of the electronic device 200 and/or a second sensor module 217 (e.g., heart rate monitoring (HRM) sensor) disposed on the back of the electronic device 200. In an embodiment, the first sensor module 204 may be disposed under the flexible display 230 on the front of the electronic device 200. In an embodiment, the first sensor module 204 and/or the second sensor module 217 may include at least one of proximity sensor, illuminance sensor, time-of-flight (TOF) sensor, ultrasonic sensor, fingerprint recognition sensor, gesture sensor, gyro sensor, barometric pressure sensor, magnetic sensor, acceleration sensor, grip sensor, color sensor, infrared (IR) sensor, biometric sensor, temperature sensor, or humidity sensor.

According to an embodiment, the camera module may include a first camera module 205 disposed on the front of the electronic device 200 and a second camera module 216 disposed on the back of the electronic device 200. In an embodiment, the electronic device 200 may include a flash (not shown) positioned near the second camera module 216. In an embodiment, the camera modules 205 and 216 may include one or multiple lenses, an image sensor, and/or an image signal processor. In an embodiment, the first camera module 205 may be disposed under the flexible display 230 and may be configured to photograph a subject through a portion of the active area (e.g., display area) of the flexible display 230.

According to an embodiment, the first camera module 205 among the camera modules and some sensor modules 204 among the sensor modules 204 and 217 may be arranged to detect an external environment through the flexible display 230. For example, the first camera module 205 or some sensor modules 204 may be arranged in the second space 2201 of the second housing 220 so as to come into contact with the external environment through a transmissive region or perforated opening formed in the flexible display 230. In an embodiment, the region facing the first camera module 205 of the flexible display 230 may be formed as a transmissive region with a specified transmittance being a part of the active area that displays content. In an embodiment, the transmissive region may be formed to have a transmittance ranging from about 5% to about 20%. This transmissive region may include a region overlapping with the effective area (e.g., field-of-view area) of the first camera module 205 through which light passes to create an image by being imaged by an image sensor. For example, the transmissive region of the flexible display 230 may include a region where the pixel arrangement density and/or wiring density is lower than surrounding regions. For example, the transmissive region may be replaced by the opening described above. For example, some camera modules 205 may include an under display camera (UDC). In a certain embodiment, some sensor modules 204 may be arranged in the second space 2201 of the second housing 220 so as to perform their functions without being visually exposed through the flexible display 230.

According to an embodiment, the electronic device 200 may include at least one antenna element (e.g., antenna elements 224b in FIG. 4) electrically connected to a wireless communication circuit (e.g., wireless communication module 192 in FIG. 1) disposed in the internal space (e.g., second space 2201 of the second housing 220). In an embodiment, the electronic device 200 may include a bezel antenna (A) disposed through at least a portion of the conductive first lateral member 211 of the first housing 210. For example, the bezel antenna (A) may include a conductive part 227 (e.g., conductive member) electrically separated through at least one cut-off portion 2271 and 2272 made of a non-conductive material (e.g., polymer) and disposed through at least a portion of the second side surface 2112 and the third side surface 2113 of the first lateral member 211. In an embodiment, the wireless communication circuit (e.g., wireless communication module 192 in FIG. 1) may be configured to transmit or receive a radio signal in at least one frequency band (e.g., about 600 MHz to 9000 MHz) (e.g., legacy band or NR band) designated through the conductive part 227. In an embodiment, the electronic device 200 may include a side cover 2112a disposed on the second side surface 2112 to cover at least a portion of the at least one cut-off portion 2271. In a certain embodiment, the bezel antenna (A) may be disposed on at least one of the first side surface 2111, the second side surface 2112, or the third side surface 2113. In a certain embodiment, the bezel antenna (A) may be disposed on at least one of the fourth side surface 2211, the fifth side surface 2212, or the sixth side surface 2213 of the second housing 220. In a certain embodiment, the electronic device 200 may further include at least one antenna module (e.g., mmWave antenna module or mmWave antenna structure) disposed in the internal space (e.g., first space 2101 or second space 2201) and arranged to transmit or receive a radio signal of a frequency band ranging from about 3 GHz to 100 GHz via another wireless communication circuit (e.g., wireless communication module 192 in FIG. 1).

According to an embodiment, slide-in and/or slide-out operations of the electronic device 200 may be performed automatically. For example, the slide-in/slide-out operation of the electronic device 200 may be performed through gear engagement between a drive motor (e.g., drive motor 260 in FIG. 4) including a pinion gear (e.g., pinion gear 261 in FIG. 4) arranged in the first space 2101 of the first housing 210 and a rack gear (e.g., rack gear 2221 in FIG. 4) arranged in the second space 2201 of the second housing 220 and engaged with the pinion gear 261. In a certain embodiment, the drive motor 260 including the pinion gear 261 may be arranged in the second space 2201 of the second housing 220, and the rack gear 2221 engaged with the pinion gear 261 may be arranged in the first space 2101 of the first housing 210. For example, when the processor (e.g., processor 120 in FIG. 1) of the electronic device 200 detects a triggering signal for transitioning from the slide-in state to the slide-out state or transitioning from the slide-out state to the slide-in state, it may drive the drive motor (e.g., drive motor 260 in FIG. 4) disposed inside the electronic device 200. In an embodiment, the triggering signal may include a signal caused by selection (e.g., touch) of an object displayed on the flexible display 230 or by manipulation of a physical button (e.g., key button) included in the electronic device 200. In a certain embodiment, the slide-in/slide-out operation of the electronic device 200 may be performed manually through user manipulation.

According to an embodiment, the electronic device 200 has a structure in which the second housing 220 is slid in and/or slid out relative to the first housing 210 along the longitudinal direction (e.g., vertical direction, ±y-axis direction) of the electronic device 200, but it is not limited thereto. For example, the electronic device 200 may have a structure in which the second housing 220 is slid in and/or slid out relative to the first housing 210 along the width direction (e.g., horizontal direction, ±x-axis direction) perpendicular to the length direction of the electronic device 200. In a certain embodiment, the electronic device 200 may be formed such that the length of the second side surface 2112 of the first housing 210 is longer than that of the first side surface 2111. In such a case, the length of the fifth side surface 2212 of the second housing 220 may also be formed to be longer than that of the fourth side surface 2211 correspondingly.

FIG. 4 is an exploded perspective view of the electronic device according to various embodiments of the disclosure.

In describing the electronic device 200 of FIG. 4, components that are substantially the same as those of the electronic device 200 of FIGS. 2A to 3B are given the same reference symbols, and detailed descriptions thereof may be omitted.

With reference to FIG. 4, the electronic device 200 may include a first housing 210 including a first space 2101, a second housing 220 that is slidably coupled to the first housing 210 and includes a second space 2201, a support member 240 that is fixed to at least a portion of the second housing 220 and is at least partially bendably received in the first space 2101 according to a slide-in operation, a flexible display 230 arranged to be supported by at least a portion of the support member 240 and the second housing 220, and a drive module (e.g., driving mechanism) that drives the second housing 220 relative to the first housing 210 in a slide-in direction (e.g., negative y-axis direction) and/or a slide-out direction (e.g., y-axis direction). In an embodiment, the first housing 210 may include a first lateral member 211, and a first rear cover 213 coupled with at least a portion of the first lateral member 211 (e.g., at least a portion of the first extension member 212). In an embodiment, the second housing 220 may include a second lateral member 221, and a second rear cover 223 coupled with at least a portion of the second lateral member 221 (e.g., at least a portion of the second extension member 221). In an embodiment, the drive module may include a drive motor 260 that is disposed in the second space 2201 and includes a pinion gear 261, and a rack gear 2221 that is arranged to engage with the pinion gear 261 in the second space 2201. In an embodiment, the drive module may further include a deceleration module (e.g., deceleration gear assembly) that is arranged to reduce the rotational speed and increase the driving force by being coupled to the drive motor 260. In an embodiment, the drive motor 260 may be arranged to be supported by a motor bracket 260a disposed in the support bracket 225 arranged in the first space 2101 of the first housing 210. In an embodiment, the drive motor 260 may be fixed to an end portion (e.g., edge) of the support bracket 225 in the slide-out direction (e.g., in y-axis direction) in the first space 2101. In an embodiment, the rack gear 2221 may be arranged in a manner of being fixed to the second extension member 222 of the second housing 220. In a certain embodiment, the rack gear 2221 may be integrally formed by being injection molded with at least a portion of the second extension member 222. In an embodiment, the rack gear 2221 may be disposed to have a length in a direction parallel to the sliding direction (e.g., ± y-axis direction). Therefore, when the electronic device 200 is assembled, the pinion gear 261 may remain in a state being engaged with the rack gear 2221; the pinion gear 261 receiving a driving force from the drive motor 260 is moved along the rack gear 2221, so that the second housing 220 may be moved relative to the first housing 210. In an embodiment, the sliding distance of the second housing 220 may be determined by the length of the rack gear 2221.

According to an embodiment, the electronic device 200 may include a plurality of electronic components arranged in the second space 2201. In an embodiment, the plural electronic components may include a first board 251 (e.g., main board), and a camera module 216, speaker 207, connector port 208, and microphone 203-1, which are arranged around the first board 251. In an embodiment, the plural electronic components are arranged around the first board 251 in the second space 2201 of the first housing 220, thereby enabling efficient electrical connection. In a certain embodiment, at least one of the plural electronic components described above may be disposed in the first space 2101 of the first housing 210.

According to an embodiment, the electronic device 200 may include a rear bracket 224 disposed between the second extension member 222 and the second rear cover 223 in the second housing 220. In an embodiment, the rear bracket 224 may be disposed to cover at least some of the plural electronic components. In an embodiment, the rear bracket 224 may be structurally coupled to at least a portion of the second extension member 222. In a certain embodiment, the rear bracket 224 may be omitted. In an embodiment, the rear bracket 224 may be disposed to cover multiple electronic components and support the second rear cover 223. In an embodiment, the rear bracket 224 may include an opening 224a (e.g., through hole) or a notch region 224c (e.g., cut portion) formed in a region corresponding to the camera module 216 and/or the sensor module (e.g., sensor module 217 in FIG. 3B). In an embodiment, the rear bracket 224 may include at least one antenna element 224b. In an embodiment, the at least one antenna element 224b may be disposed on an outer surface of the rear bracket 224 when the rear bracket 224 is formed as an injection-molded product of a dielectric material (e.g., antenna carrier). In an embodiment, the at least one antenna element 224b may include a laser direct structuring (LDS) antenna pattern formed on the outer surface of the rear bracket 224. In a certain embodiment, the at least one antenna element 224b may include a conductive plate attached to the outer surface of the rear bracket 224, or a conductive paint or conductive pattern formed on the outer surface. In a certain embodiment, the at least one antenna element 224b may be disposed in a manner of being embedded in the rear bracket 224 when being injection molded. In an embodiment, the at least one antenna element 224b may be configured to transmit or receive a radio signal of a designated frequency band (e.g., legacy band) by being electrically connected to a wireless communication circuit (e.g., wireless communication module 192 in FIG. 1) disposed on the first board 251. In an embodiment, the camera module 216 and/or the sensor module 217 may be disposed to detect the external environment through the opening 224a or the notch region 224a. In an embodiment, a region of the second rear cover 223 corresponding at least to the camera module 216 and/or the sensor module 217 may be transparently processed. In a certain embodiment, the second rear cover 223 may include a through hole formed in a region corresponding at least to the camera module 216 and/or the sensor module 217. In such a case, the through hole may be covered by a transparent window. In a certain embodiment, the camera module 216 and/or the sensor module 217 may be configured to operate only when the electronic device 200 is in the slide-out state.

According to an embodiment, the electronic device 200 may include a support bracket 225 arranged in the first space 2101 of the first housing 210. In an embodiment, the support bracket 225 may include a support part 2252 that is disposed at one end and has a curved outer surface to support the rear surface of the support member 240 that is bent during a sliding operation transitioning from the slide-out state to the slide-in state. In an embodiment, the support bracket 225 may include a support structure for supporting and fixing the drive motor 260 via the motor bracket 260a. In an embodiment, the support bracket 225 may include a battery mounting portion 2251 for accommodating the battery. In an embodiment, the drive motor 260 may be disposed at the shortest end (e.g., edge) of the support bracket 225 in the slide-out direction (e.g., y-axis direction). For example, when the assembly of the electronic device 200 is completed, the drive motor 260 may be placed at a position closest to the first board 251 among the electronic components arranged in the first housing 210, thereby helping to minimize the size and/or length of the flexible board (F1) (e.g., flexible printed circuit board (FPCB)) that electrically connects the first board 251 and the drive motor 260. In an embodiment, the electronic device 200 may include a pair of guide rails 226 that are arranged on both sides of the support bracket 225 to guide both ends of the support member 240 in a sliding direction.

According to an embodiment, the first housing 210 may include an opening 212a (e.g., through hole) disposed in a region in the first extension member 212 in correspondence to the camera module 216 and/or the sensor module 217 disposed in the second housing (220) when the electronic device 200 is in the slide-in state. In an embodiment, the camera module 216 and/or the sensor module 217 may detect the external environment through the opening 212a formed in the first housing 210 when the electronic device 200 is in the slide-in state. In a certain embodiment, the region of the first rear cover 213 corresponding to the camera module 216 and/or the sensor module 217 may be processed to be transparent.

According to an embodiment, the electronic device 200 may include a second board 252 (e.g., sub-board) and an antenna member 253 disposed between the first extension member 212 and the first rear cover 213 in the first housing 210. In an embodiment, the second board 252 and the antenna member 253 may be disposed on at least a portion of the first extension member 212. In an embodiment, the second board 252 and the antenna member 253 may be electrically connected to the first board 251 through at least one electrical connection member (e.g., flexible printed circuit board (FPCB) or flexible RF cable (FRC)). In an embodiment, the antenna member 253 may include a multi-function coil or multi-function core (MFC) antenna for performing wireless charging function, near field communication (NFC) function, and/or electronic payment function. In a certain embodiment, the antenna member 253 may be electrically connected to the second board 252, thereby being electrically connected to the first board 251 through the second board 252. In a certain embodiment, the second board 252 and/or the antenna member 253 may be electrically connected to the first board 251 through at least a portion of the flexible board (F1) connecting the drive motor 260 and the first board 251.

According to an embodiment, the support member 240 may be guided by the guide rails 226 during slide-in/slide-out operation. In an embodiment, the support member 240 may include plural multi-bars 241 that are rotatably coupled to each other, and guide protrusions 2411 that are formed to protrude at both ends of each of the multi-bars 241. In an embodiment, the guide rail 226 may include a guide slit 2261 formed at a position corresponding to the movement trajectory of the support member 240. In an embodiment, when the support member 240 fixed in a manner of being attached to the rear surface of the flexible display 230 is movably coupled with the guide rail 226, the guide protrusion 2411 is moved along the guide slit 2611, thereby helping to reduce the phenomenon of the flexible display 230 being detached or deformed during operation.

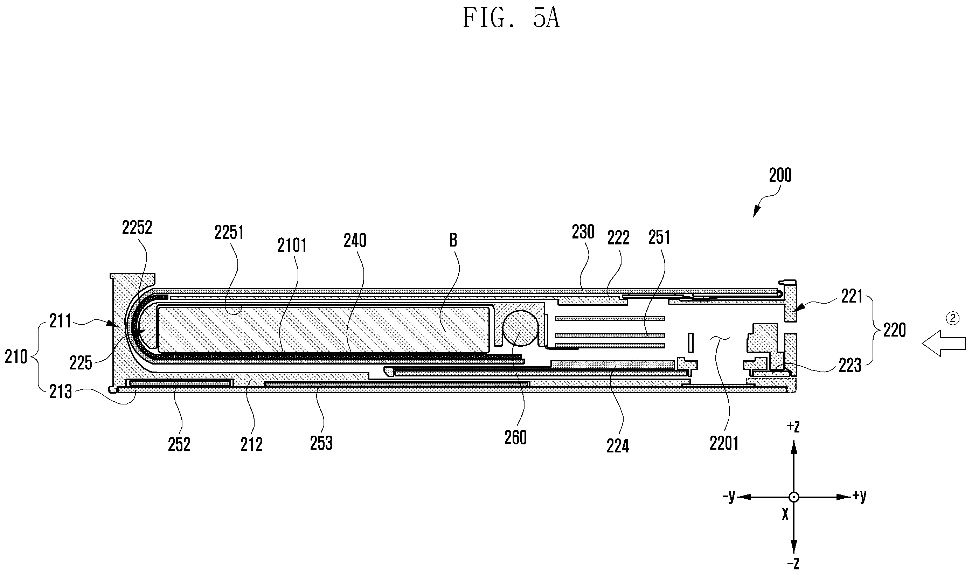

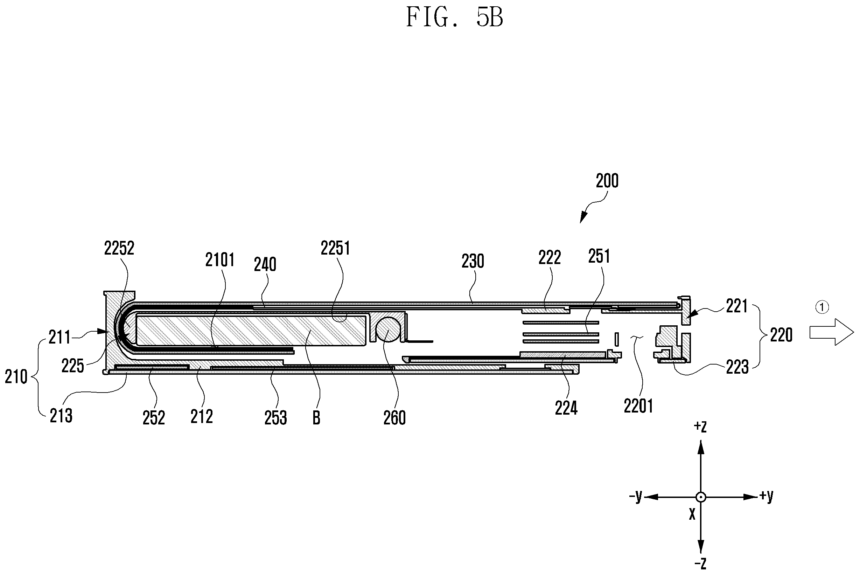

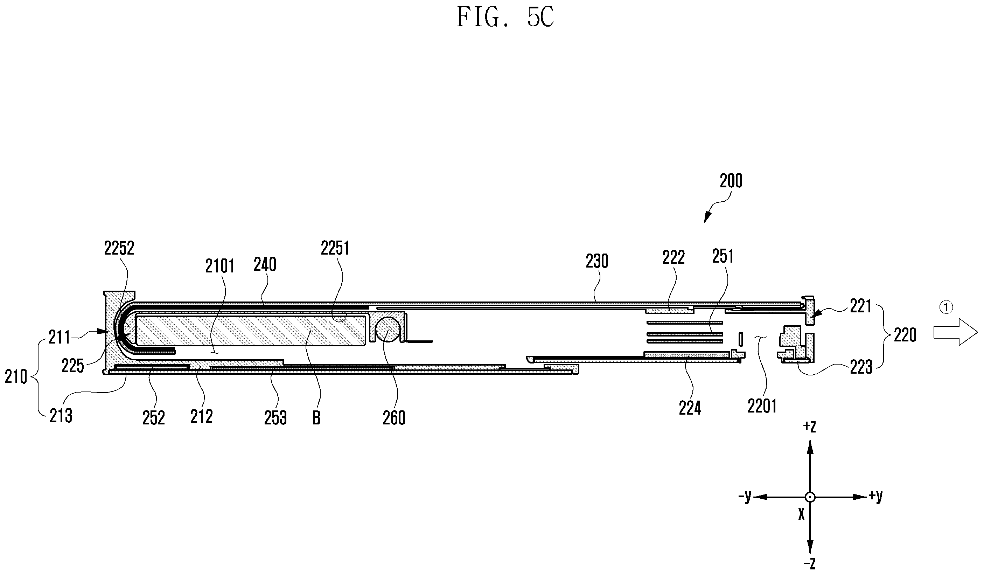

FIG. 5A is a cross-sectional view of the electronic device taken along line 5a-5a in FIG. 2A according to various embodiments of the disclosure. FIG. 5B is a cross-sectional view of the electronic device in intermediate state according to various embodiments of the disclosure. FIG. 5C is a cross-sectional view of the electronic device taken along line 5c-5c in FIG. 3A according to various embodiments of the disclosure.

In describing the electronic device 200 of FIGS. 5A to 5C, components that are substantially the same as those of the electronic device 200 of FIG. 4 are given the same reference symbols, and detailed descriptions thereof may be omitted.

With reference to FIGS. 5A to 5C, the electronic device 200 may include a first housing 210 having a first space 2101, a second housing 220 having a second space 2201, a support member 240 connected to the second housing 220 and at least partially accommodated in the first space 2101 in the slide-in state, a flexible display 230 disposed to be supported by at least a portion of the support member 240 and at least a portion of the second housing 220, a drive motor 260 disposed in the first space 2101 and including a pinion gear (e.g., pinion gear 261 in FIG. 4) engaged with a rack gear (e.g., rack gear 2221 in FIG. 4) arranged in the second space 2201. In an embodiment, the drive motor 260 may automatically move the second housing 220 in a slide-in direction (direction ②) or slide-out direction (direction ①) with respect to the second housing 220 through gear engagement between the pinion gear (e.g., pinion gear 261 in FIG. 4) and the rack gear 2121 (e.g., rack gear 2221 in FIG. 4).

According to an embodiment, at least a part of the second housing 220 may be accommodated in the first space 2101 of the first housing 210 in the slide-in state (state in FIG. 5A) of the electronic device 200. In an embodiment, at least a portion of the flexible display 230 may be accommodated together with the support member 240 in the first space 2101 in a manner of being bent into the first space 2101, so that it may be disposed not to be visible from the outside. In this case, a first display area of the flexible display 230 (e.g., display area corresponding to the first part 230a in FIG. 3A) may be exposed to the outside.

According to an embodiment, the electronic device 200 may be transitioned from the intermediate state (state in FIG. 5B) to the slide-out state (state in FIG. 5C) by controlling the operation of the drive motor 260. In a certain embodiment, the electronic device 200 may be configured to stop in a designated intermediate state between the slide-in state and the slide-out state (free stop function). In a certain embodiment, the electronic device 200 may be transitioned to the slide-in state, the intermediate state, or the slide-out state through user manipulation when driving force is not provided to the drive motor 260.

According to an embodiment, at least a part of the second housing 220 may be moved at least partially out of the first housing 210 along the first direction (direction ①) toward the outside through driving of the drive motor 260, being transitioned to the slide-out state. In an embodiment, in the slide-out state (state in FIG. 5C) of the electronic device 200, the flexible display 230 may be moved together with the support member 240 while being supported by the support bracket 225 so that the part that has slid-in into the first space 2101 may be exposed so as at least partially be visible to the outside. In this case, the flexible display 230 may expose a second display area (e.g., display area including the first part 230a and the second part 230b in FIG. 3A) that is larger than the first display area to the outside.

According to an embodiment, the electronic device 200 may include a battery (B) arranged through the battery mounting portion 2251 of the support bracket 225 fixed in the first space 2101 of the first housing 210. In an embodiment, the battery (B) disposed in the first housing 210 may not require a separate driving gap to avoid interference with surrounding structures due to movement. Hence, the battery (B) may be expanded in thickness in a manner of being close to or coming into contact with the rear surface of the support member 240 from the battery mounting portion 2251 of the support bracket 225, thereby relatively increasing the battery volume and supporting the support member 240 being moved, which may reduce the sagging phenomenon of the flexible display 230 and help to improve operational reliability.

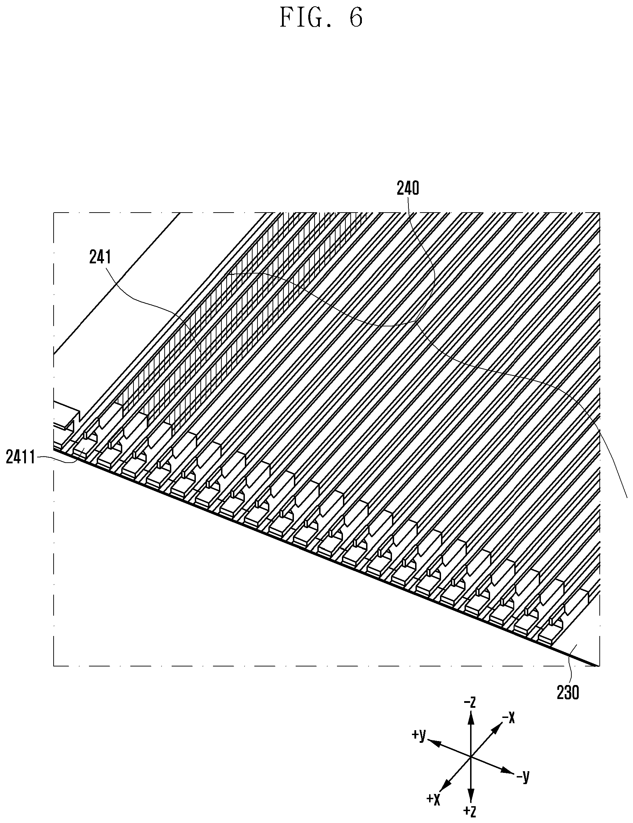

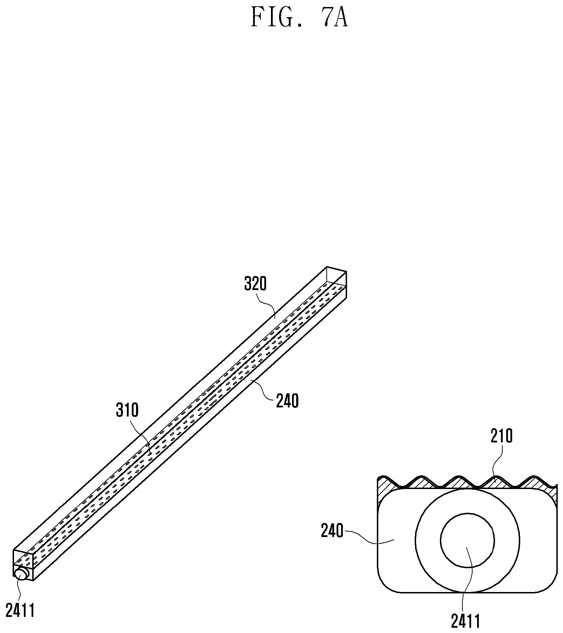

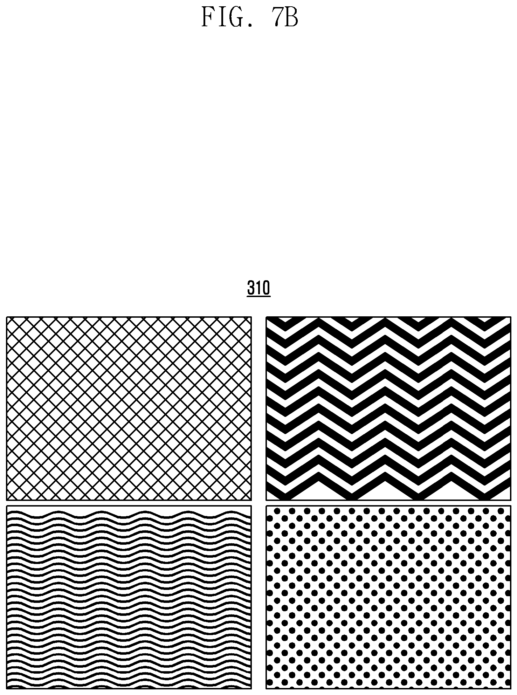

FIG. 6 is a diagram showing a support member arranged in the flexible display according to an embodiment of the disclosure. FIG. 7A is a diagram showing a pattern formed on the rear surface of the support member according to an embodiment of the disclosure. FIG. 7B is a diagram showing an embodiment of a pattern formed on the support member illustrated in FIG. 7A.

According to an embodiment of the disclosure, as shown in FIG. 6, a support member 240 composed of plural multi-bars 241 may be arranged on the rear surface (e.g., surface facing in -Z direction in FIG. 6) of the flexible display 230. In an embodiment, the support member 240 may be coupled to the rear surface of the flexible display 230 via an adhesive (P). The flexible display 230 may be slid-in into the first space 2101 of the first housing 210 in a manner of being bent while being supported by the support member 240 when at least a portion thereof is in the slide-in state. In addition, the flexible display 230 may be slid-out from the first space 2101 of the first housing 210 while being supported by the support member 240 when at least a portion thereof is in the slide-out state. In an embodiment, the support member 240 may be supported by the support bracket 225. For example, the support member 240 may be supported in a sliding operation by a curved support part 410 (e.g., support part 2252 in FIG. 4) included in the support bracket 225. In an embodiment, the flexible display 230 may be slid in or slid out into or from the first space 2101 of the first housing 210 as the plural multi-bars 241 are bent along the curved support part 410 (e.g., bending portion 413) during the slide-in or slide-out process.

According to an embodiment, the electronic device 200 may have a structure in which the flexible display 230, the support member 240, and the support bracket 225 are supported in that order. When an external impact is applied to the flexible display 230, the impact may be transferred to the inside of the electronic device 200. In this case, a collision may occur between the support member 240 supporting the flexible display 230 and the support bracket 225 supporting the support member 240. The repulsive force due to the collision between the support member 240 and the support part 410 may be transferred through the support member 240 to the flexible display 230. Hence, damage such as a crack or tear may occur to the flexible display 230. According to an embodiment of the disclosure, it is possible to present a structure that alleviates the impact occurring between the support member 240 and the support bracket 225 due to an external impact applied to the flexible display 230. This will be described in detail below.

According to an embodiment, as illustrated in FIGS. 7A and 7B, the support member 240 may include a pattern 310. The pattern 310 may be formed on the surface (e.g., - Z direction in FIG. 6) of the support member 240 facing the support bracket 225. In an embodiment, with reference to FIG. 7B, the pattern 310 may be formed on one surface of the support member 240 in various shapes.

According to an embodiment, when an external impact is applied to the flexible display 230, the support member 240 and the support bracket 225 may come into contact. The support member 240 may have an increased area in contact with the support bracket 225 through the pattern 310 formed on one surface (e.g., surface facing in - Z direction in FIG. 6). When the contact area between the support member 240 and the support bracket 225 increases, the load due to the external impact transferred through the support member 240 may be dispersed. Hence, the impact occurring between the support member 240 and the support bracket 225 may be buffered. In addition, the magnitude of a repulsive force due to the collision between the support member 240 and the support part 410 may be reduced, thereby reducing the magnitude of the repulsive force transferred to the flexible display 230. Accordingly, damage such as a crack or tear to the flexible display 230 may be alleviated or resolved.

According to an embodiment, as shown in FIG. 7A, a buffer member 320 may be disposed between the support member 240 and the support bracket 225. The buffer member 320 may be made of various materials. The buffer member 320 may be made of at least one material among polypropylene (PP), polyethylene (PE), and polyimide (PI), as a urethane, epoxy, and/or polymer based material, and may also be made of various elastic materials. The buffer member 320 may be disposed on the support member 240 so as to cover the pattern 310 of the support member 240. The support member 240 may have increased adhesion to the buffer member 320 through the pattern 310 formed on one surface (e.g., surface facing in -Z direction in FIG. 6). The buffer member 320 may prevent or alleviate a collision between the support member 240 and the support bracket 225. In an embodiment, when an external impact is applied to the flexible display 230, the support member 240 may be prevented by the buffer member 320 from colliding with the support bracket 225. Accordingly, damage such as a crack or tear occurring to the flexible display 230 due to the repulsive force generated by the collision between the support member 240 and the support bracket 225 may be alleviated or resolved.

In an embodiment, the buffer member 320 may be not disposed between the support bracket 225 and the support member 240. In this case, the friction coefficient of the surfaces where the support bracket 225 and the support member 240 face each other may be lowered to mitigate damage caused by a collision between the support member 240 and the support bracket 225. In an embodiment, at least one of the surface of the support member 240 facing the support bracket 225 (e.g., surface facing in -Z direction in FIG. 6) and the bending portion 413 of the support bracket 225 may have a reduced surface roughness (e.g., roughness) through processing. For example, one surface of the support member 240 facing the support bracket 225 may have a lowered surface roughness through processing. In a certain embodiment, the surface roughness of the bending portion 413 of the support bracket 225 may be reduced through processing. In a certain embodiment, one surface of the support member 240 facing the support bracket 225 and the bending portion 413 of the support bracket 225 may have a lowered surface roughness through processing. In an embodiment, the surface roughness of one surface of the support member 240 and the bending portion 413 of the support bracket 225 may be reduced through polishing. In an embodiment, the surface roughness may have a value between 0.1*µ*m and 1*µ*m. As the surface roughness decreases, the friction coefficient of the processed surface of the support member 240 and the bending portion 413 of the support bracket 225 may be lowered. Accordingly, when the support member 240 and the support bracket 225 collide, scratches and damage caused by the collision may be alleviated.

In an embodiment, the thickness of the buffer member 320 may be determined based on a gap between the support member 240 and the support bracket 225. The support member 240 and the support bracket 225 may form a gap so that they do not come into contact with each other in consideration of the smoothness of the sliding motion during the slide-in or slide-out process of the electronic device 200. Likewise, the buffer member 320 may maintain a specific gap with the support bracket 225 so as not to come into contact with the support bracket 225 during the slide-in or slide-out process of the electronic device 200. For example, the buffer member 32 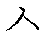 0 may be formed to have a thickness of about 200 micrometers or less to maintain a gap with the support bracket 225.

According to an embodiment, the pattern 310 may be formed on the support member 240 in various ways. For example, the pattern 310 may be formed by at least one of blasting, masking etching, or CNC machining. In addition, the pattern 310 may be formed on the support member 240 through various processes that can be performed by a person skilled in the art.

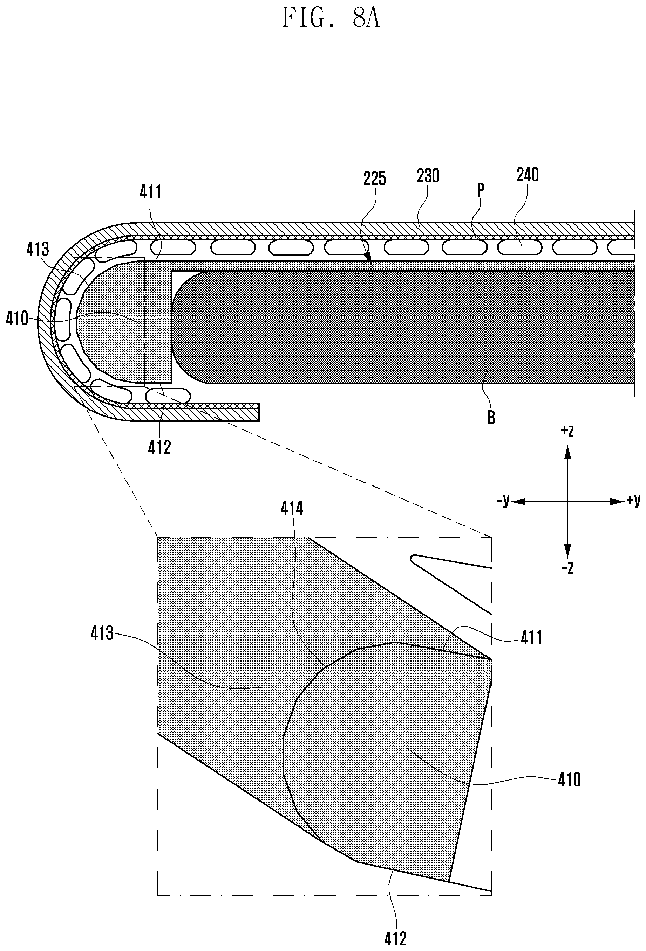

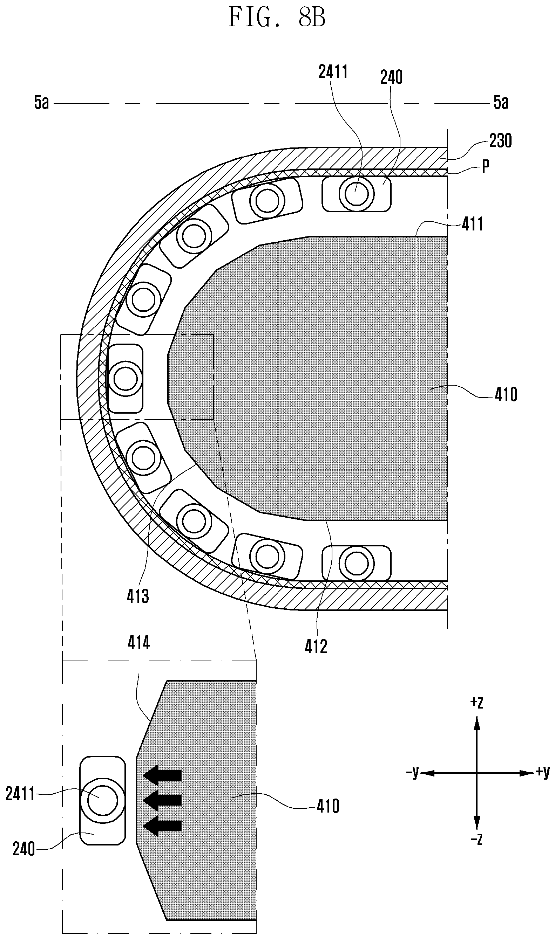

FIGS. 8A and 8B are cross-sectional views of the electronic device taken along line 5a-5a in FIG. 2A for explaining a polygon formed in the support part of the support bracket according to one embodiment of the disclosure.

According to an embodiment, as illustrated in FIGS. 8A and 8B, the support part 410 (e.g., support part 2252 in FIG. 4) of the support bracket 225 may include a first flat portion 411, a second flat portion 412, and a bending portion 413. The first flat portion 411 may be a flat surface facing the front surface (e.g., surface facing in +Z direction in FIG. 8A) of the electronic device 200 from the support part 410. The second flat portion 412 may be a flat surface facing the rear surface (e.g., surface facing in -Z direction in FIG. 8A) of the electronic device 200 from the support part 410. The first flat portion 411 and the second flat portion 412 may be portions that evenly support the flexible display 230. The bending portion 413 may be a portion that is at least partially bent to connect the first flat portion 411 and the second flat portion 412. In an embodiment, the support member 240 may be bent along the bending portion 413 during the slide-in or slide-out process of the electronic device 200.

According to an embodiment, as shown in FIGS. 8A and 8B, the support part 410 may include a polygon 414 formed on the outer surface. The polygon 414 may be formed on the outer surface of the bending portion 413. In an embodiment, the flexible display 230 may be slid in or slid out into or from the first space 2101 of the first housing 210 as the plural multi-bars 241 of the support member 240 are bent along the bending portion 413 during the slide-in or slide-out process. The flexible display 230 may be bent to be slid in or slid out into or from the first space 2101 as the plural multi-bars 241 are bent. In an embodiment, when the support member 240 is bent along the bending portion 413, the corners of the plural multi-bars 241 may impact the flexible display 230. In this case, the flexible display 230 may be damaged, such as cracking or tearing. According to an embodiment of the disclosure, in the support part 410, the bending portion 413 where the support member 240 is bent may be formed as a polygon 414. In this case, the angle at which the support member 240 is bent at the bending portion 413 may be reduced compared to when the bending portion 413 is a curved surface. Accordingly, the impact applied to the flexible display 230 by the corners of the plural multi-bars 241 of the support member 240 may be alleviated.

Meanwhile, when a collision occurs between the support member 240 and the support part 410, the plural multi-bars 241 of the support member 240 may be supported through a flat surface forming the polygon 414. As the area of contact between the support member 240 and the support part 410 increases, the load caused by the collision between the support member 240 and the support part 410 may be distributed. As a result, the impact generated between the support member 240 and the support part 410 may be alleviated. Accordingly, the magnitude of a repulsive force transferred to the flexible display 230 is reduced, so that damage such as a crack or tear that may occur to the flexible display 230 may be alleviated.

According to an embodiment, the number of sides of polygons 414 of sides formed in the bending portion 413 may be determined in consideration of the angle at which the support member 240 is bent. In an embodiment, as the number of polygons decreases, the angle at which the support member 240 is bent at the bending portion 413 may increase. In this case, the frequency with which the plural multi-bars 241 of the support member 240 come into contact with the flexible display 230 may increase, thereby increasing the amount of impact applied to the flexible display 230. Conversely, as the number of polygons increases, the angle at which the support member 240 is bent at the bending portion 413 may decrease. In this case, the frequency with which the plural multi-bars 241 of the support member 240 come into contact with the flexible display 230 may be reduced, thereby reducing the amount of impact applied to the flexible display 230. On the other hand, if polygons exceeding a threshold are formed, the bending portion 413 may become a curved surface, which may increase the collision between the plural multi-bars 241 of the support member 240 and the flexible display 230. According to an embodiment of the disclosure, the number of polygons 414 formed in the bending portion 413 may be determined in consideration of the angle at which the support member 240 is bent. For example, the number of polygons may be set so that the angle at which the support member 240 is bent at the bending portion 413 is minimized. In an embodiment, the bending portion 413 may be formed to have 8 or more and 16 or less sides. Accordingly, the frequency of collision between the plural multi-bars 241 of the support member 240 and the flexible display 230 can be reduced, thereby alleviating damage to the flexible display 230.

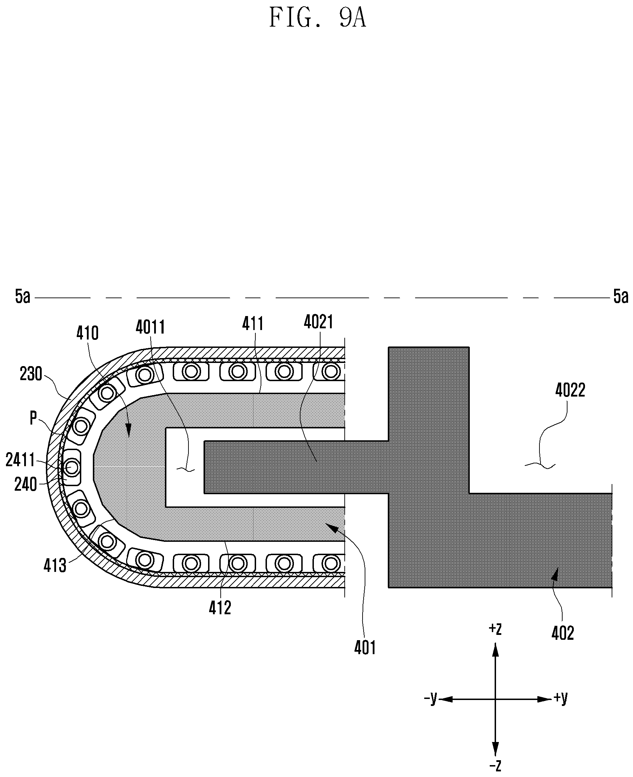

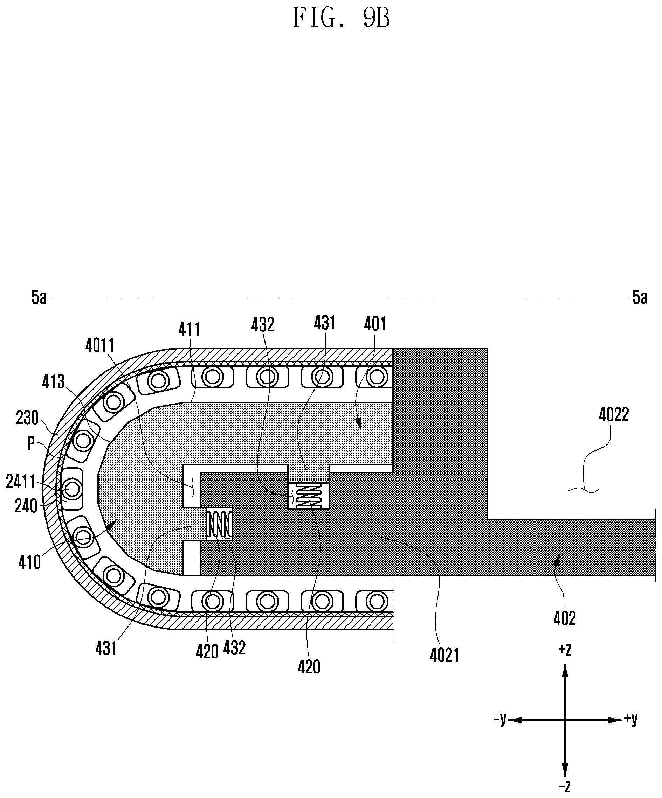

FIG. 9A is a cross-sectional view of the electronic device taken along line 5a-5a in FIG. 2A for explaining a coupling relationship between a first bracket and a second bracket of the support bracket according to an embodiment of the disclosure. FIG. 9B is a cross-sectional view of the electronic device taken along line 5a-5a in FIG. 2A for explaining an elastic member disposed between a coupling groove of the first bracket and a coupling portion of the second bracket according to an embodiment of the disclosure.

According to an embodiment, as shown in FIGS. 9A and 9B, the support bracket 225 may include a first bracket 401 and a second bracket 402. The first bracket 401 may include a support part 410 (e.g., support part 2252 in FIG. 4). The second bracket 402 may include a mounting portion 4022 (e.g., battery mounting portion 2251 in FIG. 4) on which electronic components (e.g., battery (B)) are mounted. The first bracket 401 and the second bracket 402 may be made of different materials. In an embodiment, the first bracket 401 may be made of an elastic material so that impact can be alleviated when the support member 240 and the support part 410 collide. For example, the first bracket 401 may be made of a non-metallic material such as synthetic resin, ceramic, and/or engineering plastic. In an embodiment, the second bracket 402 may be made of a material having a specific strength so that the electronic components can be supported and protected. For example, the second bracket 402 may be made of a metal material such as an alloy of aluminum, stainless steel (STS, SUS), iron, magnesium, and/or titanium.

According to an embodiment, the first bracket 401 and the second bracket 402 may be formed separately and then combined. In an embodiment, with reference to FIG. 9A, the first bracket 401 may include a coupling groove 4011 into which a coupling portion 4021 of the second bracket 402 is inserted. The coupling portion 4021 of the second bracket 402 may be in a form that protrudes from one surface of the second bracket 402 toward the coupling groove 4011 of the first bracket 401. The coupling portion 4021 of the second bracket 402 may be inserted into the coupling groove 4011 of the first bracket 401. In an embodiment, an adhesive may be disposed in the coupling groove 4011 of the first bracket 401. Accordingly, the first bracket 401 and the second bracket 402 may be combined together as the coupling portion 4021 of the second bracket 402 is inserted into the coupling groove 4011 of the first bracket 401.

According to an embodiment, as shown in FIG. 9B, the first bracket 401 may include a protrusion 431 projecting from one surface of the coupling groove 4011 toward the second bracket 402. For example, the protrusion 431 may include two protrusions having Y-axis and Z-axis lengths with reference to FIG. 9B. In an embodiment, the protrusion 431 may be formed integrally with the first bracket 401. In a certain embodiment, the protrusion 431 may be formed separately from the first bracket 401 and may then be coupled to the first bracket 401. In an embodiment, the protrusion 431 may be made of various materials having a certain level of strength so as to ensure durability against external impact. For example, the protrusion 431 may be made of a metal material and/or a non-metal material. Here, the metal material may include an alloy of aluminum, stainless steel (STS, SUS), iron, magnesium, and titanium, and the non-metal material may include synthetic resin, ceramic, and engineering plastic.

The second bracket 402 may include a groove 432 formed in the coupling portion 4021 so that the protrusion 431 of the first bracket 401 can be inserted. For example, the groove 432 may include two grooves having Y-axis and Z-axis lengths corresponding respectively to the two protrusions 431. In an embodiment, the second bracket 402 may be made of a metal material so that the protrusion 431 can be inserted into and supported by the groove 432. For example, in the second bracket 402, the region surrounding the groove 432 in which the protrusion 431 is seated may be made of a metal material. In an embodiment, the groove 432 may be formed to a size in which the protrusion 431 may be inserted. For example, the groove 432 may be formed in the second bracket 402 to a size that includes the protrusion 431. In an embodiment, when the protrusion 431 of the first bracket 401 is inserted into the groove 432 of the second bracket 402, they may not come into contact with each other. For example, when the protrusion 431 of the first bracket 401 is inserted into the groove 432 of the second bracket 402, the separation between the protrusion 431 and the groove 432 may be about 0.2 mm or more. In an embodiment, an elastic member 420 may be disposed between the protrusion 431 of the first bracket 401 and the groove 432 of the second bracket 402. For example, the elastic member 420 may be disposed in the separation space between the protrusion 431 and the groove 432. In an embodiment, the elastic member 420 may be at least one of rubber, urethane, resin, or a spring. When an external impact is applied to the flexible display 230 and a collision occurs between the support member 240 and the support part 410, the impact may be cushioned by the elastic member 420. Hence, damage to the flexible display 230 caused by a collision between the support member 240 and the support part 410 can be alleviated.

According to an embodiment, the number of the protrusions 431 of the first bracket 401, the grooves 432 of the second bracket 402, and the elastic members 420 disposed between the protrusions 431 and the grooves 432 may be varied within a range that can be carried out by a person skilled in the art. For example, the elastic structure formed by the protrusion 431, the groove 432, and the elastic member 420 may be formed at least in one of the upper part, the lower part, and the intermediate part between the upper part and the lower part of the electronic device 200, and may also be formed in various other locations. In addition, the elastic structure formed by the protrusion 431, the groove 432, and the elastic member 420 may be formed at regular intervals.

In the above description, the coupling groove 4011 is described as being formed in the first bracket 401 and the coupling portion 4021 is described as being formed in the second bracket 402. However, in a certain embodiment, the coupling groove 4011 may be formed in the second bracket 402 and the coupling portion 4021 may be formed in the first bracket 401.

Similarly, the protrusion 431 may be formed in the second bracket 402, and the groove 432 may be formed in the first bracket 401.

An electronic device 200 according to an embodiment of the disclosure may include: a first housing 210; a second housing 220 slidably coupled to the first housing; a flexible display 230 that is arranged to be supported by the first housing and the second housing, and whose display area is reduced or expanded based on the slide-in or slide-out of the second housing; a support member 240 that includes a bendable structure, supports at least a portion of the flexible display, and moves according to the sliding of the second housing; a guide rail 226 that guides the movement of the support member; and a support bracket 225 that supports the support member and includes a support part 410 (e.g., support part 2252 in FIG. 4) whose outer surface is formed as a polygon 414.

In addition, the support part of the support bracket may include a first flat portion 411 facing the front surface of the electronic device, a second flat portion 412 facing the rear surface of the electronic device, and a bending portion 413 at least partially bent to connect the first flat portion and the second flat portion.

In addition, the polygon of the support part may be formed on the outer surface of the bending portion.

In addition, the support bracket may include a first bracket 401 including the support part, and a second bracket 402 on which electronic components of the electronic device are mounted, wherein the first bracket and the second bracket may be made of different materials.

In addition, the first bracket may be made of a non-metallic material having elasticity, and the second bracket may be made of a metal material.

In addition, the first bracket may include a protrusion 431 that is inserted into at least a portion of the second bracket, and the second bracket may include a groove 432 into which the protrusion of the first bracket is inserted.

In addition, the electronic device may further include an elastic member 420 disposed between the protrusion of the first bracket and the groove of the second bracket.

In addition, the support member may include a pattern 310 formed on a surface facing the support bracket.

In addition, the electronic device may further include a buffer member 320 that is disposed on the surface on which the pattern is formed and is made of a material having elasticity.

In addition, the pattern of the support member may be formed by at least one of blasting, masking etching, or CNC machining.

An electronic device 200 according to an embodiment of the disclosure may include: a first housing 210; a second housing 220 slidably coupled to the first housing; a flexible display 230 that is arranged to be supported by the first housing and the second housing, and whose display area is reduced or expanded based on the slide-in or slide-out of the second housing; a support member 240 that includes a bendable structure, supports at least a portion of the flexible display, and moves according to the sliding of the second housing; a guide rail 226 that guides the movement of the support member; and a support bracket 225 that includes a first bracket 401 including a support part 410 (e.g., support part 2252 in FIG. 4) supporting the support member, and a second bracket 402 on which electronic components of the electronic device are mounted and made of a material different from that of the first bracket.

In addition, the first bracket may be made of a non-metallic material having elasticity, and the second bracket may be made of a metal material.

In addition, the first bracket may include a protrusion 431 that is inserted into at least a portion of the second bracket, and the second bracket may include a groove 432 into which the protrusion of the first bracket is inserted.

In addition, the electronic device may further include an elastic member 420 disposed between the protrusion of the first bracket and the groove of the second bracket.

In addition, the support part of the support bracket may include a first flat portion 411 facing the front surface of the electronic device, a second flat portion 412 facing the rear surface of the electronic device, and a bending portion 413 that is at least partially bent to connect the first flat portion and the second flat portion and has an outer surface formed as a polygon 414.

In addition, the support member may include a pattern 310 formed on a surface facing the support part of the support bracket.

In addition, the electronic device may further include a buffer member 320 that is disposed on the surface of the support member on which the pattern is formed and is made of a material having elasticity.

An electronic device 200 according to an embodiment of the disclosure may include: a first housing 210; a second housing 220 slidably coupled to the first housing; a flexible display 230 that is arranged to be supported by the first housing and the second housing, and whose display area is reduced or expanded based on the slide-in or slide-out of the second housing; a support bracket 225 including a support part 410 (e.g., support part 2252 in FIG. 4); a support member 240 that includes a bendable structure, is supported by the support part, supports at least a portion of the flexible display, moves according to the sliding of the second housing, and includes a pattern 310 formed on a surface facing the flexible display; and a guide rail 226 that guides the movement of the support member.

In addition, the electronic device may further include a buffer member 320 that is disposed on the support member so as to cover the pattern of the support member.

In addition, the electronic device may further include a support bracket 225 that includes a first bracket 401 including a support part 410 supporting the support member and made of a non-metallic material having elasticity, and a second bracket 402 on which electronic components of the electronic device are mounted and made of a metal material, wherein the support part of the support bracket may include a first flat portion 411 facing the front surface of the electronic device, a second flat portion 412 facing the rear surface of the electronic device, and a bending portion 413 that is at least partially bent to connect the first flat portion and the second flat portion and has an outer surface formed as a polygon 414.

An embodiment of the disclosure may present a structure in which an impact between the support member and the support bracket caused by an external impact applied to the display is buffered. Damage to the display due to the repulsive force between the support member and the support bracket can be mitigated as the impact between the support member and the support bracket is cushioned.

## Claims

1. An electronic device (200) comprising:
a first housing (210);
a second housing (220) slidably coupled to the first housing;
a flexible display (230) that is arranged to be supported by the first housing and the second housing, and whose display area is reduced or expanded based on slide-in or slide-out of the second housing;
a support member (240) that includes a bendable structure, supports at least a portion of the flexible display, and moves according to sliding of the second housing;
a guide rail (226) that guides the movement of the support member; and
a support bracket (225) that supports the support member and includes a support part (2252, 410) whose outer surface is formed as a polygon (414).

2. The electronic device of claim 1, wherein:
the support part of the support bracket includes a first flat portion (411) facing a front surface of the electronic device, a second flat portion (412) facing a rear surface of the electronic device, and a bending portion (413) at least partially bent to connect the first flat portion and the second flat portion; and
the polygon of the support part is formed on an outer surface of the bending portion.

3. The electronic device of claim 1, wherein:
the support bracket includes a first bracket (401) including the support part, and a second bracket (402) on which electronic components of the electronic device are mounted;
the first bracket is made of a non-metallic material having elasticity; and
the second bracket is made of a metallic material.

4. The electronic device of claim 3, wherein:
the first bracket includes a protrusion (431) that is inserted into at least a portion of the second bracket; and
the second bracket includes a groove (432) into which the protrusion of the first bracket is inserted.

5. The electronic device of claim 4, further comprising an elastic member (420) disposed between the protrusion of the first bracket and the groove of the second bracket.

6. The electronic device of claim 1, wherein the support member includes a pattern (310) formed on a surface facing the support bracket.

7. The electronic device of claim 6, further comprising a buffer member (320) that is disposed on the surface of the support member on which the pattern is formed and is made of a material having elasticity.

8. An electronic device (200) comprising:
a first housing (210);
a second housing (220) slidably coupled to the first housing;
a flexible display (230) that is arranged to be supported by the first housing and the second housing, and whose display area is reduced or expanded based on slide-in or slide-out of the second housing;
a support member (240) that includes a bendable structure, supports at least a portion of the flexible display, and moves according to sliding of the second housing;
a guide rail (226) that guides the movement of the support member; and
a support bracket (225) that includes a first bracket 401 including a support part (2252, 410) supporting the support member, and a second bracket 402 on which electronic components of the electronic device are mounted and made of a material different from that of the first bracket.

9. The electronic device of claim 8, wherein:
the first bracket is made of a non-metallic material having elasticity; and
the second bracket is made of a metallic material.

10. The electronic device of claim 8, wherein:
the first bracket includes a protrusion (431) that is inserted into at least a portion of the second bracket; and
the second bracket includes a groove (432) into which the protrusion of the first bracket is inserted.

11. The electronic device of claim 10, further comprising an elastic member (420) disposed between the protrusion of the first bracket and the groove of the second bracket.

12. The electronic device of claim 8, wherein the support member includes a pattern (310) formed on a surface facing the support part of the support bracket.

13. The electronic device of claim 12, further comprising a buffer member (320) that is disposed on the surface of the support member on which the pattern is formed and is made of a material having elasticity.

14. An electronic device (200) comprising:
a first housing (210);
a second housing (220) slidably coupled to the first housing;
a flexible display (230) that is arranged to be supported by the first housing and the second housing, and whose display area is reduced or expanded based on slide-in or slide-out of the second housing;
a support bracket (225) including a support part (2252, 410);
a support member (240) that includes a bendable structure, is supported by the support part, supports at least a portion of the flexible display, moves according to sliding of the second housing, and includes a pattern (310) formed on a surface facing the flexible display; and
a guide rail (226) that guides the movement of the support member.

15. The electronic device of claim 14, further comprising a buffer member (320) that is disposed on the support member so as to cover the pattern of the support member.
